# EUROPEAN PATENT APPLICATION

(11) **EP 2 398 283 A1**
(43) Date of publication of application: **21.12.2011**
(21) Application number: 09839970.2
(22) Date of filing: 12.11.2009
(51) Int. Cl.: H04W 48/20, H04W 48/16, H04W 84/12

(54) **WIRELESS COMMUNICATION DEVICE AND PRIORITY CHANGE METHOD**

(30) Priority: 16.02.2009 JP 2009032923
(71) Applicant: Panasonic Corporation, Kadoma-shi Osaka 571-8501 (JP)
(72) Inventor: HATANO, Kouji, Osaka 540-6207 (JP); KAWAMURA, Akira, Osaka 540-6207 (JP); TAKEI, Yoshihiko, Osaka 540-6207 (JP)
(74) Representative: Grünecker, Kinkeldey, Stockmair & Schwanhäusser
(86) International application number: PCT/JP2009/006045
(87) International publication number: WO 2010/092647

(57) **Abstract**

A wireless communication device able to change the priority of profile of communication equipment without user operation. In this device: a holding unit (101) holds profiles which each contain information necessary to establish a connection with communication equipment, each profile having a priority value set between different communication equipment that is used when searching; a selection unit (106) of a connection destination selection unit (104) selects the profile of the communication equipment that is performing connection to the device among the profiles held by the holding unit (101); and a change unit (107) raises the priority of the profile selected by the selection unit (106) to the highest among the profiles for the communication equipment that are able to connect with the device out of the profiles held by the holding unit (101).

## Description

### Technical Field

The present invention relates to a radio communication apparatus and a priority change method.

### Background Art

With a conventional wireless LAN (Wireless Local Area Network: WLAN) system, a method in which a radio communication apparatus selects and connects with an AP that has a better communication state from among multiple access points (Access Point: AP) has been proposed.

For example, in a WLAN system, a radio communication apparatus holds a profile (or a connection profile) that includes information used to establish communication with an AP. In a profile held in a radio communication apparatus, for example, BSSID (Basic Service Set Identifier) to identify each AP, ESSID (Extended Service Set Identifier) to identify a network (service area) formed with one or multiple APs, an authentication system such as WPA (Wi-Fi Protocol Access) or WPA2, or information to show a state of connection ("connected" or "disconnected") between an AP and a radio communication apparatus, are included. A radio communication apparatus searches for APs corresponding to the profiles held in the apparatus, selects the profile of the destination AP from among the profiles of connectable APs, establishes connection based on the selected profile.

As one method to search for an AP, there is a search method by active scanning. In active scanning, a radio communication apparatus searches for a connectable AP by carrying out broadcast transmission of a search request (probe request) that includes, for example, BSSID of an AP to search for or ESSID, and receiving a search response (probe response) from the AP. Also, the radio communication apparatus sequentially searches for APs corresponding to the profiles held in the apparatus.

For example, a radio communication apparatus, such as a mobile telephone terminal or a WLAN terminal, is frequently used on moving to several places, so that it is necessary to register many profiles to establish communication with many APs. Thus, the radio communication apparatus is required to perform the above AP search as many times as the number of the profiles held in the apparatus (the number of registered APs), so that the time to search for APs becomes longer.

As an AP search method to shorten the AP search time, there is a method of determining the priorities on a search to multiple profiles held in a radio communication apparatus (see, for example, patent literature 1 and patent literature 2). From among the profiles that the radio communication apparatus holds, the apparatus selects the profiles in order from the profile having the highest priority, and searches for the APs corresponding to the selected profiles. By this means, for an AP that has a higher priority, the radio communication apparatus can determine at earlier timing whether or not it is able to connect with. The priorities upon a search are determined based on communication evaluation information, including, for example, the signal power of an AP (signal level), how much an AP battery remains, how often an AP is used, the security robustness of the authentication system provided in that AP, or the place where the radio communication apparatus is located.

To further shorten the AP search time, studies are underway to allow a radio communication apparatus to change the priorities of the profiles held in the radio communication apparatus, according to the situation of the place where the apparatus is located and the destination AP (see, for example, patent literature 3). Specifically, a radio communication apparatus changes the priority of the profile of each AP by user's manual operation.

### Citation List

### Patent Literature

PTL1
   Japanese patent application laid-open no.2006-319946
PTL2
   Japanese Translation of a PCT Application Laid-Open No.2007-525894
PTL3
   Japanese patent application laid-open no.2008-160646

### Summary of Invention

### Technical Problem

When the connection with an AP is manually established, the radio communication apparatus connects with the AP corresponding to the profile that is selected by input operation, from among the profiles held in the apparatus. When changing the priorities upon a search for the above mentioned AP, according to the selected destination AP, a radio communication apparatus changes the priorities of the profiles held in the apparatus by input operation. Thus with the radio communication apparatus, users are required to separately perform both input operations of selecting the destination AP and changing the priorities of the profiles, and it is troublesome.

It is therefore an object of the present invention to provide a radio communication apparatus and a priority change method which can change the priorities of the profiles of APs without user's operation.

### Solution to Problem

The radio communication apparatus of the present invention employs a configuration having: a holding section which holds profiles including necessary information to establish a connection with a communication device and in which priorities of individual communication devices upon a search are set; a selecting section which selects a profile of the communication device which establishes a connection with the radio communication apparatus among the profiles held in holding section; and a changing section which changes a priority of the selected profile to the highest in the profiles of the communication devices which are able to connect with the radio communication apparatus among the profiles held in the holding section.

The priority change method of the present invention holds profiles which include information required to establish a connection with a communication device and in which priorities of individual communication devices are set, selects the profile of the communication device which establishes a connection with the radio communication apparatus among the profiles held in a holding section, and changes the priority of the selected profile to the highest in the profiles of the communication devices which are able to connect with the radio communication apparatus among the profiles held in the holding section.

### Advantageous Effects of Invention

The present invention can change the priorities of the profiles of APs without user's operation.

### Brief Description of Drawings

FIG 1 is a conceptual diagram showing a configuration of a radio communication system according to each embodiment of the present invention;
FIG.2 is a block diagram showing a configuration of a radio communication apparatus according to embodiment 1 of the present invention;
FIG.3 shows a flow of priority change process according to embodiment 1 of the present invention;
FIG.4 shows a detailed flow of priority change process according to embodiment 1 of the present invention (change method 1);
FIG.5 shows one example of priority change process according to embodiment 1 of the present invention (change method 1);
FIG.6 shows a detailed flow of priority change process according to embodiment 1 of the present invention (change method 2);
FIG.7 shows one example of priority change process according to embodiment 1 of the present invention (change method 2);
FIG.8 shows one example of priority change process according to embodiment 1 of the present invention (change method 3);
FIG.9 is a block diagram showing a configuration of a radio communication apparatus according to embodiment 2 of the present invention;
FIG. 10 shows a flow of priority change process and recovery process according to embodiment 2 of the present invention;
FIG.11 shows a flow of priority recovery process according to embodiment 2 of the present invention;
FIG. 12 shows a variation according to embodiment 2 of the present invention;
FIG. 13 is a block diagram showing a configuration of a radio communication apparatus according to embodiment 3 of the present invention;
FIG. 14 shows a flow of priority recovery process according to embodiment 3 of the present invention;
FIG.15 is a block diagram showing a configuration of a radio communication apparatus according to embodiment 4 of the present invention;
FIG.16A shows one example of priority change showing process according to embodiment 4 of the present invention;
FIG.16B shows one example of priority change showing process according to embodiment 4 of the present invention; and
FIG.16C shows one example of priority change showing process according to embodiment 4 of the present invention.

### Description of Embodiments

Hereinafter, embodiments of the present invention will be explained in detail with reference to the accompanying drawings.

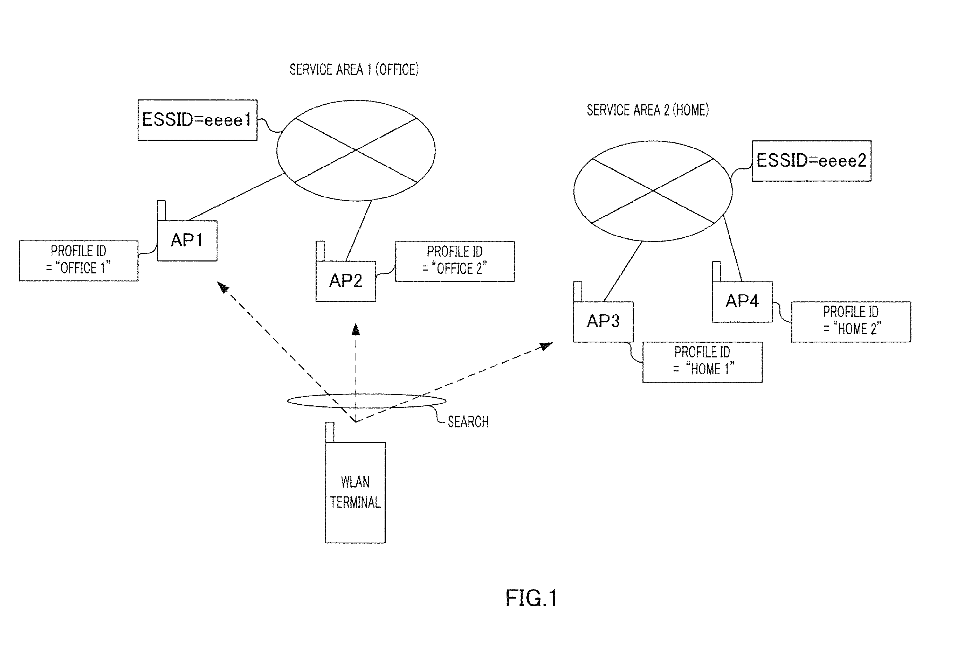

FIG. 1 shows a configuration of a radio communication system according to each embodiment of the present invention. As shown in FIG.1, with a radio communication system in each embodiment below, there are service area 1 (ESSID = eeee1) formed with AP1 and AP2, and service area 2 (ESSID = eeee2) formed with AP3 and AP4. For example, service area 1 assumes an office, and service area 2 assumes a home. For each AP1 - AP4, a WLAN terminal (a radio communication apparatus according to the present embodiment) shown in FIG.1 holds, a profile that includes, for example, a profile ID that specifies each AP, ESSID of the service area to which each AP belongs, BSSID, an authentication system (for example, WPA or WPA2), and a state of connection (for example, connected or disconnected). In the following description, as shown in FIG.1, it is assumed that profile ID of AP1 is "office 1," profile ID of AP2 "office 2," AP3 profile ID "home 1," and AP4 profile ID "home 2." In a WLAN terminal, among the priorities of the profiles provided in AP1 - AP4, AP3 ("home 1") is the highest, AP1 ("office 1") is next to AP3, AP4 ("home 2") is next to AP1, and AP2 ("office 2") is the lowest.

### (Embodiment 1)

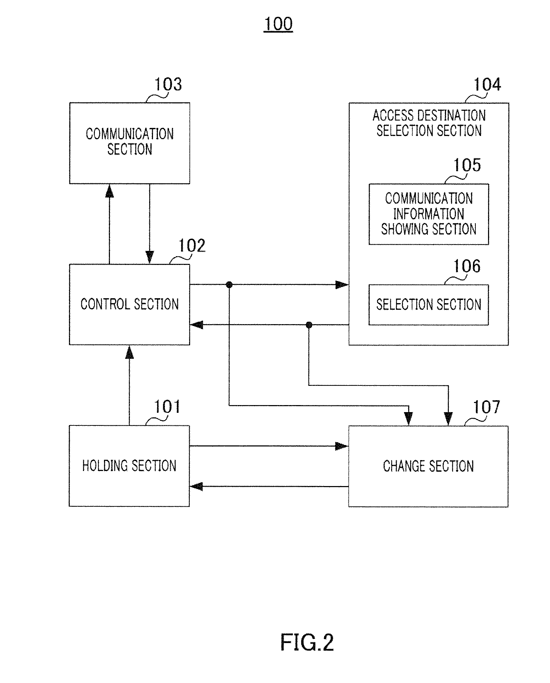

FIG.2 shows a configuration of radio communication apparatus 100 according to the present embodiment. With radio communication apparatus 100 shown in FIG.2, holding section 101 holds profiles that include information that is necessary to establish connections with APs. In this case, an AP profile that is registered in radio communication apparatus 100 includes, for example, a profile ID, ESSID, BSSID, an authentication system, and the state of connection. Also, in the profile, the priorities among different APs (AP1 - AP4 in FIG.1) are provided on searching for an AP. According to commands from an update section (not shown), holding section 101 updates the holding profile, by making changes, additions, and omissions of the profile. According to commands from change section 107, holding section 101 updates the holding profiles, by changing the priorities of the profiles.

Control section 102 controls to search for and connect with the destination AP based on the profiles held in holding section 101. Specifically, control section 102 commands communication section 103 to search for an AP, from among the profiles held in holding section 101, in descending order from the AP corresponding to the profile having highest priority. Control section 102 outputs the information showing the result to search for an AP (as to, for example, which APs are connectable or not connectable) input from communication section 103, to access destination selection section 104 and change section 107.

Control section 102 controls a connection with an AP according to the access destination selecting result showing the destination AP that is input from access destination selection section 104. Specifically, control section 102 selects the profile of the destination AP shown in the access destination selecting result from among the profiles held in holding section 101. Based on the selected profile, control section 102 commands communication section 103 to connect with the destination AP.

Communication section 103 searches for and connects with an AP based on a WLAN protocol, according to the command from control section 102. Communication section 103 outputs to control section 102 the information showing the AP search result or the state of connection (communication state).

Access destination selection section 104 has communication information showing section 105 and selection section 106 inside. Communication information showing section 105 of access destination selection section 104 shows the information which is input from control section 102 and shows each AP search result (as to, for example, which APs are connectable or not connectable), for example, on a display.

Selection section 106 of access destination selection section 104 selects the profile of the destination AP by input operation, based on the information shown at communication information showing section 105. Selection section 106 outputs the access destination selecting result showing the profile of the selected destination AP to control section 102 and change section 107.

Change section 107 changes the priorities of the profiles held in holding section 101, based on the access destination selecting result input from selection section 106 of access destination selection section 104. Specifically, change section 107 changes, as the highest, the priority of the profile (the profile selected at selection section 106) of the destination AP that is shown in the access destination selecting result, in the profiles of the APs (including the destination AP) that are connectable with the apparatus among the profiles held in holding section 101. Change section 107 commands holding section 101 to change the priority of the profile.

Next, a priority change process of a profile in control section 107 of radio communication apparatus 100 according to the present embodiment will be described in detail. Hereinafter, priority change methods 1 - 3 in change section 107 will be explained in detail respectively.

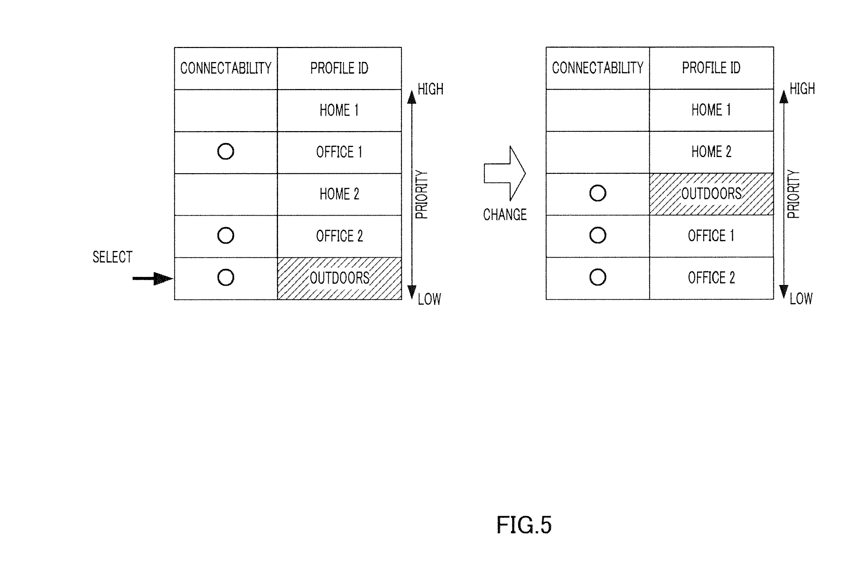

In the change methods 1 - 3 below, holding section 101 of radio communication apparatus 100 (WLAN terminal) holds the profiles of AP1 (profile ID: "office 1"), AP2 (profile ID: "office 2"), AP3 (profile ID: "home 1"), and AP4 (profile ID: "home 2") shown in FIG.1. In FIG.5, FIG.7, and FIG.8 described later, the profile that includes profile ID: "outdoors" shows that any APs other than AP1 - AP4 shown in FIG 1 will be connected once searched. Thus, when selecting the priority of the profile ID: "outdoors", radio communication apparatus 100 connects with any ESSID of the searched AP.

Radio communication apparatus 100 (WLAN terminal) searches for APs in descending order of the priorities of the profiles, from AP 3 (profile ID: home 1) having the highest priority to the AP (profile ID: outdoors, but not shown) having the lowest priority. In this case, in the radio communication system shown in FIG.1, radio communication apparatus 100 (WLAN terminal) is located in service area 1 (office) and is located out of the service area of AP 3 and AP 4 forming service area 2 (home). Thus, as shown in each left side of FIG.5, FIG.7, and FIG.8, in radio communication apparatus 100 (WLAN terminal), as a search result of AP, the connections with AP1 ("office 1 ") and AP2 ("office 2") become possible (the columns of connectability shown in FIG.5: "○"), and the connections with AP3 ("home 1") and AP4 ("home 2") become impossible (the columns of connectability shown in FIG.5: blank).

Change section 107 according to change methods 1 - 3 below changes the priority of the profile of the AP (destination AP) selected in selection section 106, to the highest priority, in the profiles of APs (including the selected AP) that are connectable with the apparatus among the profiles held in holding section 101.

### <Change meth od 1>

In the present change method, change section 107 maintains the relationship of priorities of between the profile of an AP selected at selection section 106 and an AP profiles that are unable to connect with the apparatus.

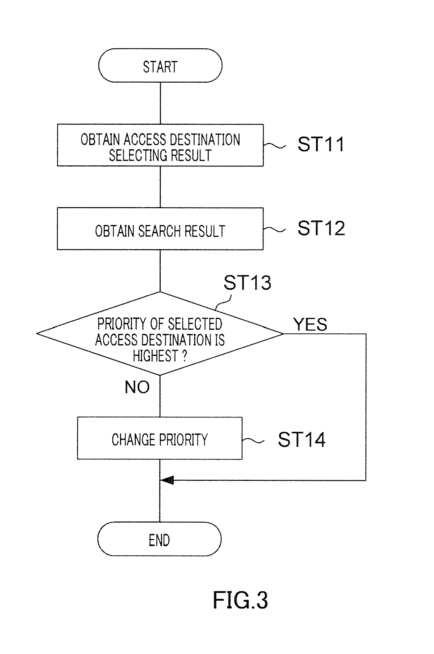

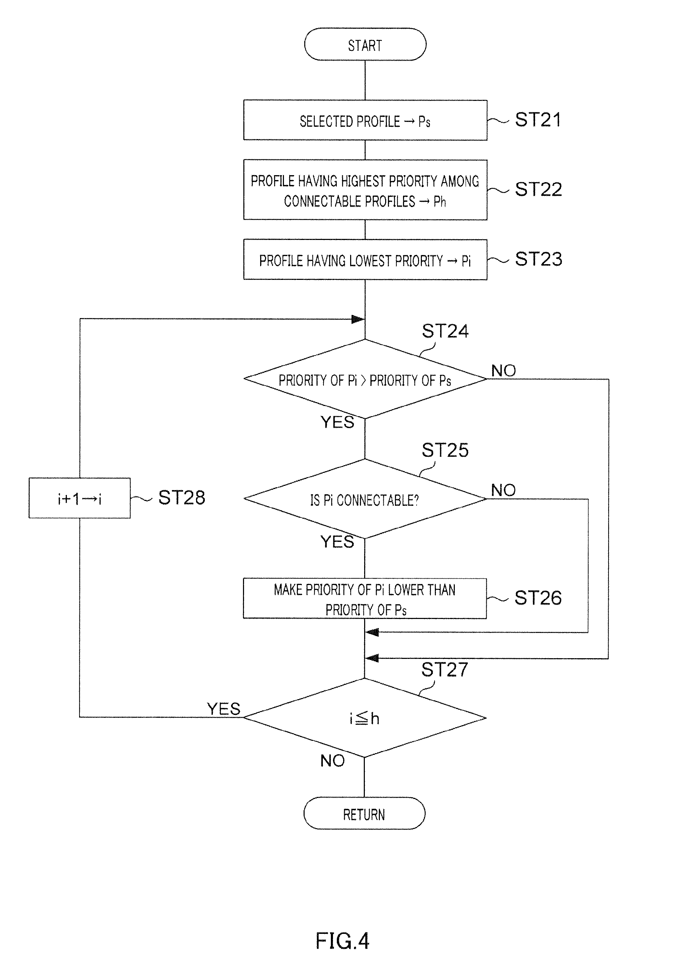

F IG.3 shows a flow of a priority change process of a profile in change section 107 according to the present change method, and FIG.4 shows a more detailed flow of a priority change process of a profile in ST14 shown in FIG.3.

In step (hereinafter "ST") 11 in FIG.3, change section 107 obtains the access destination selecting result input from selection section 106. In ST12, change section 107 obtains each AP search result (which APs are connectable or not connectable) input from control section 102.

In ST13, change section 107 determines whether or not the priority of the profile that the destination AP shown in the access destination selecting result obtained at ST11, is the highest, among the priorities of the profiles held in holding section 101.

When the priority of the profile of the destination AP is the highest among the priorities of the profiles held in holding section 101 (ST13: YES), change section 107 does not do anything and ends the process.

On the other hand, when the priority of the profile of the destination AP is not the highest among the priorities of the profiles held in holding section 101 (ST13: NO), in ST14, change section 107 changes the priority of the profile of the destination AP.

Ne xt, the details of change process of a profile in ST14 shown in FIG.3 will be described by using FIG.4. In FIG.4, index i that counts the profiles held in holding section 101 is reset (for example, i = 1, but not shown). In FIG.4, the indexes (i =1, 2, 3, ..., N) are attached to each profile (for example, N profiles) held in holding section 101, in order from a profile having lower priority. Thus, profile Pi having the lowest priority is assumed that i = 1, and the profile Pi having the highest priority is assumed that i = N.

In FIG.4, at ST21, change section 107 obtains profile Ps (that is, the profile selected at selection section 106) of the destination AP shown in the access destination selecting result that is obtained in ST1 1 shown in FIG.3. In ST22, change section 107 obtains profile Ph (that is, i = h) having the highest priority in the profiles of connectable APs among the profiles held in holding section 101. In ST23, change section 107 obtains profile Pi (however, i = 1) having the lowest priority among the profiles held in holding section 101.

In ST24, change section 107 compares the priority of the profile (the profile of the destination AP) Ps obtained in ST21, and the priority of profile Pi (the profile obtained in processes in ST23 or ST28). When the priority of profile Pi is equal to or lower than the priority of profile Ps (ST24: NO), the step moves to ST27.

When the priority of profile Pi is higher than the priority of the profile (ST24: YES), in ST25, change section 107 determines whether or not it is possible to connect with the AP corresponding to profile Pi, based on the search result obtained in ST12 shown in FIG.3. When it is possible to connect with the AP corresponding to profile Pi (ST25: NO), the step moves to ST27.

When it is possible to connect with the AP corresponding to profile Pi (ST25: YES), in ST26, change section 107 makes the priority of profile Pi lower than the priority of profile Ps. In other words, change section 107 makes the priority of profile Ps higher than the priority of profile Pi.

In ST27, change section 107 determines whether or not index i is equal to or lower than h. When index i is equal to or lower than h (ST27: YES), change section 107 increments index i such as i = i + 1 (ST28) and moves the process to ST24. When index i is higher than h (ST27: NO), change section 107 returns to the process shown in FIG.3 and ends the priority change process.

Thus, change section 107 makes the priorities of profiles Pi of all connectable APs other than the destination AP lower than the priority of the profile of the destination AP. In other words, change section 107 makes the priority of profile Ps of the destination AP the highest among the profiles of connectable APs. However, change section 107 keeps, in ST25, the priority of profile Ps of the destination AP selected at selection section 106 lower than the priorities of the profiles that are unable to connect with the apparatus and that have higher priorities than profile Ps. Thus, the priority relationship between profile Ps of the destination AP and the profiles of APs that are unable to connect with the apparatus is maintained.

Next, a specific example of the priority change process of the profile in change section 107 will be described. Here, among the profiles shown in the left side of FIG.5, selection section 106 (FIG.2) selects the AP, the profile ID is "outdoors". In this case, change section 107 changes the priorities of the profiles as shown in the right side of FIG.5, by performing the processes shown in FIG.3 and FIG.4. Specifically, as shown in the right side of FIG.5, among the priorities of the profiles set in AP1 - AP4 and the AP (the destination AP), the profile ID is "outdoors", AP3 ("home 1") is the highest, AP4 ("home 2") is next to AP3, AP ("outdoors") is next to AP4, AP1 ("office 1") is next to the AP ("outdoors"), and AP2 ("office 2") is the lowest.

Thus, as shown in the right side of FIG.5, the priority of the profile of the AP ("outdoors") selected in selection section 106 is changed to the highest among the priorities of the profiles of the APs (profile IDs: "office 1", "office 2", and "outdoors"), the connectability columns are "○". The priority of the profile of the AP ("outdoors") selected in selection section 106 is lower than the priorities of unconnectable APs (profile IDs: "home 1" and "home 2"), in both left side of FIG.5 and right side of FIG.5. Thus, the priority relationship between the profile of the AP ("outdoors") selected in selection section 106 and the profiles of the unconnectable APs (APs of profile IDs: "home 1" and "home 2") is maintained before and after the priority change process.

Here, for example, in the left side of FIG.5, the AP ("home 1") and the AP ("home 2") have higher priorities than the AP ("outdoors"). Thus, if the connections with the AP ("home 1") and the AP ("home 2") are possible, radio communication apparatus 100 has a greater chance to select the AP ("home 1") or the AP ("home 2").

Thus, according to the present change method, for example, radio communication apparatus 100 preferentially searches for the APs that had higher priorities before the priorities of the profiles have been changed, even when the APs (AP ("home 1") and AP ("home 2") in FIG.5) that have been unable to connect with become connectable as communication environment changes. By this means, radio communication apparatus 100 can shorten the AP search time.

According to the present change method, only by selecting the destination AP, radio communication apparatus 100 automatically changes the priority of the profile held in holding section 101.

### <Change meth od 2>

With the present change method, change section 107 makes the priority of the profile of AP selected at selection section 106 the highest in all the profiles held in holding section 101.

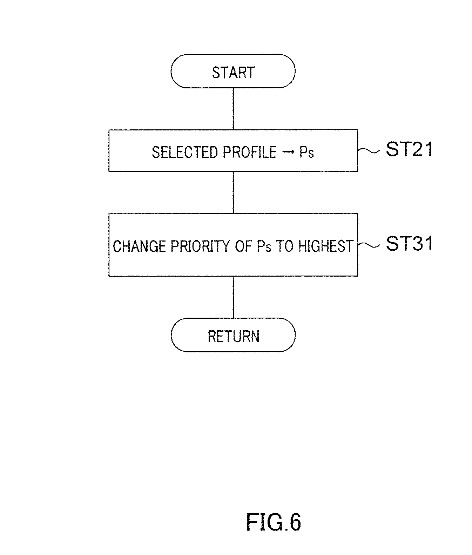

A1 though the flow of priority change process of the profile in change section 107 according to the present change method is the same as the flow of the process of change method 1 shown in FIG.3, the process shown in FIG.6 is the only difference from the process flow of change method 1, instead of the process shown in FIG.4 in ST14 shown in FIG.3. Processes in FIG.6 that are the same as in FIG.4 will be assigned the same reference numerals as in FIG.4 and overlapping descriptions will be omitted.

In FIG.6, in ST31, change section 107 changes the priority of the profile (the profile of the destination AP) Ps obtained in ST21 to the highest of the priorities of all the profiles held in holding section 101.

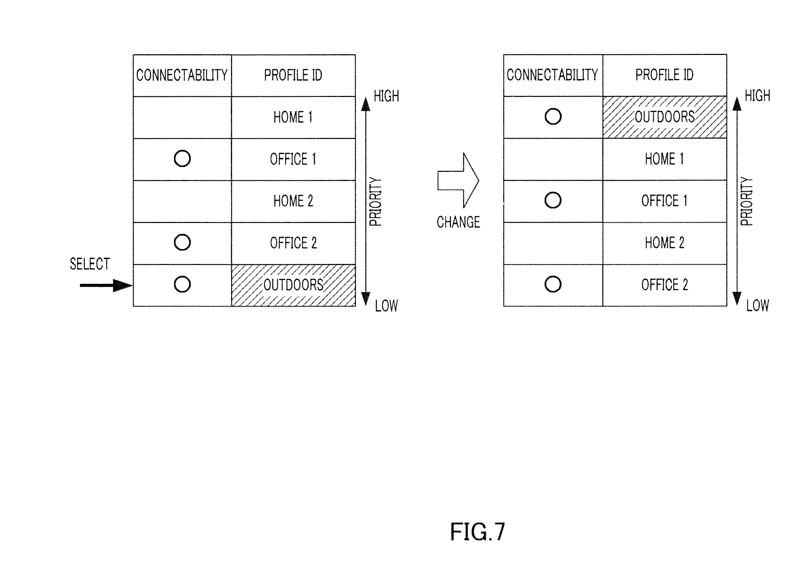

Ne xt, a specific example of the priority change process of the profile in change section 107 will be described. Her e, as in change method 1, among the profiles shown in the left side of FIG.7, selection section 106 (FIG.2) selects the AP, the profile ID is "outdoors". In this case, change section 107 changes the priorities of the profiles as shown in the right side of FIG.7, by performing the processes shown in FIG.3 and FIG.6. Specifically, as shown in the right side of FIG.7, among the priorities of the profiles provided in AP1 - AP4 and the AP (the destination AP) having the profile ID of "outdoors", the AP ("outdoors") is the highest, AP3 ("home 1") is next to the AP ("outdoors"), AP1 ("office 1") is next to AP3 ("home 1"), AP4 ("home 2") is next to AP1, and AP2 ("office 2") is the lowest.

As shown in the right side of FIG.7, as in change method 1, the priority of the profile of the AP ("outdoors") selected in selection section 106 is changed to the highest among the priorities of the profiles of the APs (profile IDs: "office 1", "office 2", and "outdoors") having the connectability columns of "○". As shown in the right side of FIG.7, the priority of the profile of the AP ("outdoors") selected in selection section 106 is changed to the highest among all the priorities of the profiles held in holding section 101, including unconnectable APs (profile IDs: "office 1" and "office 2").

Thus, according to the present change method, for example, radio communication apparatus 100 can quickly perform a re-search for the destination AP (the AP ("outdoors") in FIG.7), even when a connection with an AP is frequently disconnected under the environment where communication is unstable. Thus, when an AP search is repeated in the same communication environment, radio communication apparatus 100 can shorten the AP search time by preferentially searching for the selected AP (the AP ("outdoors") in FIG.7).

According to the present change method, as in change method 1, only by selecting the destination AP, radio communication apparatus 100 can automatically change the priorities of the profiles held in holding section 101.

### <Change meth od 3>

In the present change method, change section 107 changes the priority of the profile of the selected AP higher than the priorities of the profiles of the APs that are unable to connect with the apparatus and that are assigned lower priorities than the profiles of APs that are able to connect with the apparatus.

A1 though the flow of priority change process of the profile in change section 107 according to the present change method is the same as the process of change method 1 shown in FIG.3, the only difference from the process flow of change method 1 is that the process of ST25 is not performed in the process of ST14 (FIG.4) shown in FIG.3.

Thus, in FIG.4, when the priority of profile Pi is higher than the priority of profile Ps (ST24: YES), change section 107 does not perform ST25, and makes the priority of profile Pi lower than the priority of profile Ps in ST26.

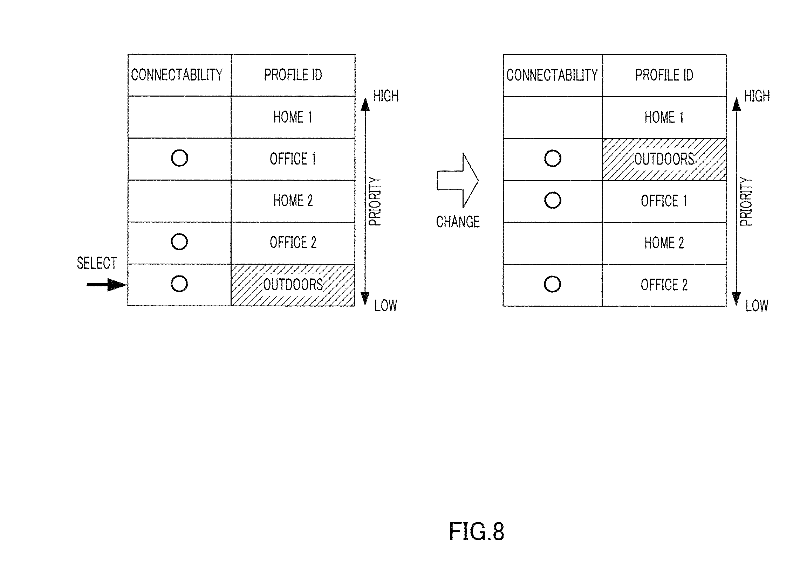

Ne xt, a specific example of the priority change process of the profile in change section 107 will be described. Here, as in change method 1, among the profiles shown in the left side of FIG.8, selection section 106 (FIG.2) selects the AP, the profile ID is "outdoors". In this case, change section 107 changes the priorities of the profiles as shown in the right side of FIG.8, by performing the processes shown in FIG.3 and FIG.4 (however, not performing ST25). Specifically, as shown in the right side of FIG.8, among the priorities of the profiles provided in AP1 - AP4 and the AP (the destination AP) having profile ID of "outdoors", AP3 ("home 1") is the highest, the AP ("outdoors") is next to AP3, AP1 ("office 1") is next to the AP ("outdoors"), AP4 ("home 2") is next to AP1, and AP2 ("office 2") is the lowest.

As shown in the right side of FIG.8, as in change method 1, the priority of the AP ("outdoors") selected in selection section 106 is changed to the highest among the priorities of the profiles of the APs (profile IDs: "office 1", "office 2", and "outdoors") having the connectability columns of "○".

Before changing the priorities (the left side of FIG.8), the AP ("office 1") that has the highest priority among the profiles of connectable APs has a lower priority than the AP ("home 1") and has a higher priority than the AP ("home 2"), among the APs that are unable to connect with radio communication apparatus 100. On the other hand, after changing the priorities (the right side of FIG.8), the AP ("outdoors") that has the highest priority among the profiles of connectable APs has a lower priority than the AP ("home 1") and has a higher priority than the AP ("home 2"), among the APs that are unable to connect with radio communication apparatus 100. Thus, change section 107 changes the priority of the profile of the destination AP ("outdoors") selected by selection section 106 to be higher than the priority of the profile of the AP ("home 2") which is unable to connect with the apparatus and in which lower priorities than the profiles of the APs which are connectable with the apparatus are provided.

In other words, the profile of the highest priority among the profiles of connectable APs (the AP ("office 1") shown in the left side of FIG.8 before changing the priorities, the AP ("outdoors") shown in the right side of FIG.8 after changing the priorities), and the profiles of APs that are unable to connect with the apparatus (the AP ("home 1") and the AP ("home 2") shown in the left side and right side in FIG.8) maintain the relationships in terms of their priorities before and after their priorities change process.

B y this means, according to the present change method, when an AP search is repeated in the same communication environment (for example, when the communication environment is unstable), radio communication apparatus 100 can search for the selected AP (the AP ("outdoors") in FIG.7) more preferentially as in change method 2.

As shown in the left side of FIG.8 and the right side of FIG.8, the profiles (profile IDs: "office 1" and "office 2") other than the profile of the AP ("outdoors") selected in selection section 106 among the APs (the connectability columns: "○") that are able to connect with radio communication apparatus 100, and the profiles (profile IDs: "home 1" and "home 2") of the APs (the connectability columns: blank) that are unable to connect with radio communication apparatus 100, maintain the relationship in terms of priorities before and after the priorities change process. Specifically, before changing the priorities (the left side in FIG.8), the priorities are high in descending order from the AP ("home 1"), the AP ("office 1"), the AP ("home 2"), and the AP ("office 2"). On the other hand, even after changing the priorities (the right side in FIG.8), the priorities are high in descending order from the AP ("home 1"), the AP ("office 1"), the AP ("home 2"), and the AP ("office 2").

B y this means, according to the present change method, as in change method 1, radio communication apparatus 100 can search preferentially for the AP having higher priority before changing the priorities of the profiles, for example, even when the unconnectable APs (AP ("home 1") and AP ("home 2") in FIG.8) by a change of communication environment, become connectable.

According to the present change method, as in change method 1, only by selecting the destination AP, radio communication apparatus 100 can automatically change the priorities of the profiles held in holding section 101.

Profile priority change methods 1 - 3 of the priority in change section 107 have been explained in detail above.

Therefore, according to the present embodiment, by selecting the destination AP the radio communication apparatus can automatically change the priorities of the profiles held in the apparatus. Thus, the present embodiment can change the priorities of the profiles without user's operation.

Profile priority change method in change section 107 is not limited to have to be fixed between priority change methods 1 - 3 in advance, but it is equally possible to switch the priority change method according to the user's choice.

It is equally possible that communication section 103 outputs information including, for example, field intensity of an AP or communication speed as communication state, change section 107 determines the stability of communication environment based on the communication state and switches the priority change method between priority change methods 1-3.

B y this means, it is always possible to shorten the AP search time whether communication is stable or unstable.

### (Embodiment 2)

In the present embodiment, after changing the priority of the profile of the destination AP, when the connection with the destination AP is disconnected, the radio communication apparatus returns the priority of the profile of the destination AP to the priority before changing.

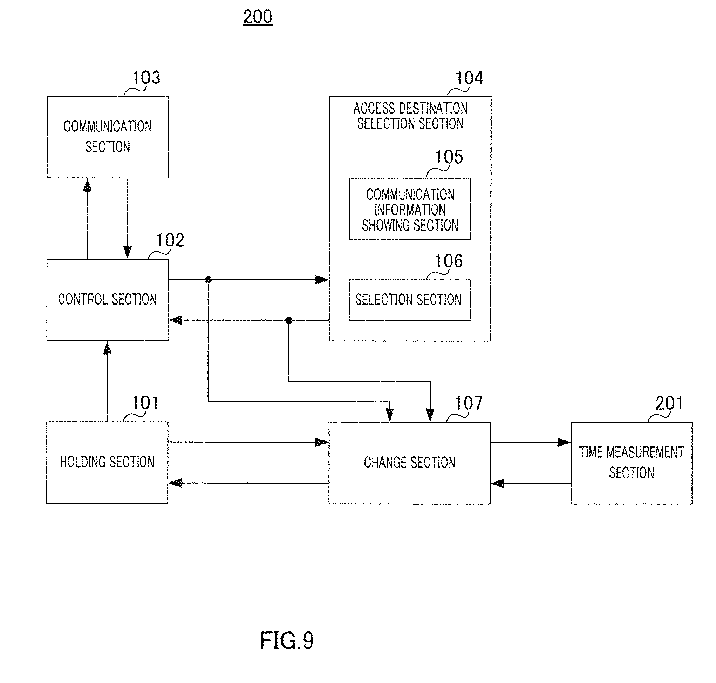

The details will be described below. FIG.9 shows a configuration of radio communication apparatus 200 according to the present embodiment. Configuration sections in FIG.9 that are the same as in FIG.2 will be assigned the same reference numerals as in FIG.2 and overlapping descriptions will be omitted.

Time measurement section 201 of radio communication apparatus 200 (FIG.9) according to the present embodiment receives as input from change section 107 a connecting state notice showing the connecting state (connected or disconnected) between the apparatus and the destination AP. When a connecting state notice showing that the connecting state is "disconnected" is received as input, time measurement section 201 measures the lapse time from the time when the connecting state notice is received. When a predetermined time has been passed, time measurement section 201 outputs to change section 107 the lapse time information showing that the predetermined time has been passed.

Change section 107 receives as input a connecting state notice from control section 102. Change section 107 saves the priorities of the current profiles held in holding section 101, before changing the priority of the profile of the AP (the destination AP) selected at selection section 106 as embodiment 1. Change section 107 changes the priority of the profile of the destination AP as embodiment 1. Change section 107 outputs this connecting state notice to time measurement section 201, after changing the priority of the profile of the destination AP and when the connecting state notice showing that the connecting state is "disconnected" is received as input. Change section 107 commands holding section 101 to return the priority of the profile of the destination AP to the priority before changing (the saved priority), when lapse time information is input from time measurement section 201 (that is, when a predetermined time has passed from the time when a connecting state notice ("disconnected") was input).

Hold ing section 101 puts (that is, resumes) the priorities back to the priorities of the profiles before changing according to a command from change section 107, and by this means updates the holding profile.

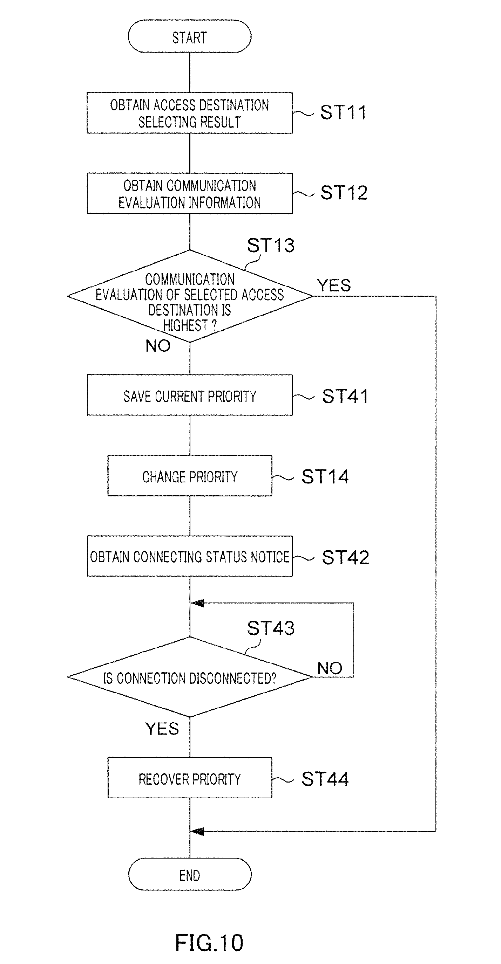

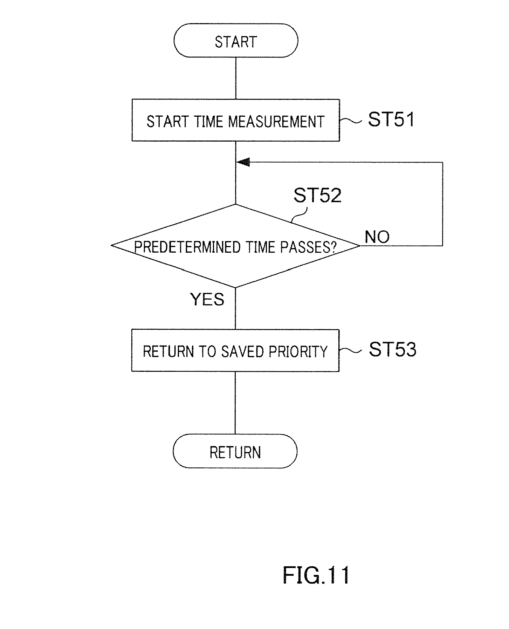

Ne xt, a priority change (recovery) process of a profile in control section 107 of radio communication apparatus 200 according to the present embodiment will be described in detail. FIG.10 shows a flow of a priority change process of a profile in change section 107 according to the present embodiment, and FIG. 11 shows a more detailed flow of a priority recovery process of a profile in ST44 shown in FIG. 10. Processes in FIG.10 that are the same as in FIG.3 will be assigned the same reference numerals as in FIG.3 and overlapping descriptions will be omitted.

In FIG.10, in ST41, change section 107 saves the current priority of the profile held in holding section 101. After changing the priority of the profile of the destination AP in ST14, in ST42, change section 107 obtains from control section 102 a connecting state notice showing a connecting state (connected or disconnected) between the apparatus and the destination AP.

When a connecting state notice obtained in ST42 shows "connected" (ST43: NO), change section 107 does not do anything and repeats the decision of ST43. On the other hand, when a connecting state notice obtained in ST42 shows "disconnected" (ST43: YES), in ST44, change section 107 recovers the priority of the profile held in holding section 101 to the priority (the priority before changing) that is saved in ST41.

Ne xt, the details of change process of the APs in ST44 shown in FIG.10 will be described by using FIG. 11.

In ST51, by outputting a connecting state notice showing that a connecting state is "connected," change section 107 allows time measurement section 201 to start to measure the passing time from the time when a connecting state becomes "connected."

Unt il the predetermined time passes from the time when a connecting state becomes "connected" (ST52: NO), change section 107 does not do anything. On the other hand, when the predetermined time has been passed from the time when a connecting state becomes "disconnected" (ST52: YES), that is, when lapse time information is input from time measurement section 201, in ST53, change section 107 returns the priorities of the profiles held in holding section 101, to the priorities saved in ST41 shown in FIG. 10.

For example, a case will be explained where radio communication apparatus 200 connects with an AP on a temporary basis, that is, where the priority of the profile of a selected destination AP is temporarily increased. Radio communication apparatus 200 changes the priority of the profile of the destination AP as embodiment 1, so that it is possible to shorten the time for searching for the destination AP even if the connection with the destination AP is disconnected. After disconnected with the destination AP, when a predetermined time has passed, that is, when the connection with the destination AP is considered to end, radio communication apparatus 200 automatically recovers the priority of the profile to the state before changing. Thus, even when connected with an AP on a temporary basis, only by selecting an AP by input operation, radio communication apparatus 200 can automatically perform to change the profile or to recover the profile.

For example, when the communication environment is unstable, it is equally possible to combine change method 2 of embodiment 1 and the present embodiment. By this means, radio communication apparatus 200 can minimize the time to search for the destination AP even if the connection with the destination AP is disconnected, and can automatically return the priorities of the profiles when the connection with the destination AP ends.

Therefore, according to the present embodiment, as embodiment 1, by selecting the destination AP, the radio communication apparatus can automatically change the priority of the profiles held in the apparatus, and after disconnected, can automatically return the priorities of the profiles before changing. Thus, the present embodiment can change and recover the priorities of the profile without user's operation.

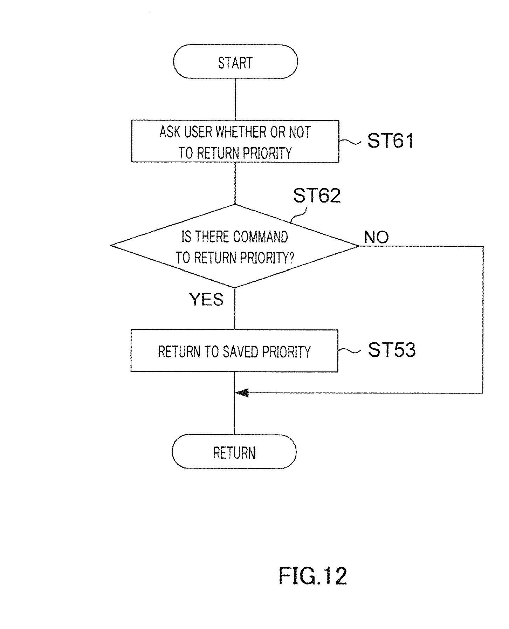

The present embodiment has explained a case where, when a predetermined time has been passed from the time when the connection with the destination AP is disconnected, radio communication apparatus 200 automatically returns the priorities of the profiles held in holding section 101 to the priorities before changing. However, with the present invention, when the connection with the destination AP is disconnected, radio communication apparatus 200 may select by input operation whether or not to return the priorities of the profiles held in holding section 101 to the priorities before changing. Specifically, as shown in FIG.12, in ST61, change section 107 of radio communication apparatus 200 asks a user whether or not to return the priorities of the profiles held in holding section 101 to the priorities before changing. For example, when there is a command by user's input operation to return the priorities of the profiles held in holding section 101 (ST62: YES), in ST53 as the present embodiment, change section 107 returns the priorities of the profiles held in holding section 101 to the priorities saved in ST41 shown in FIG.10. On the other hand, when there is not a command to return the priorities of the profiles held in holding section 101 (ST62: NO), or when there is a command to save the priorities after changing as is, change section 107 saves the current priorities (the priorities after changing).

### (Embodiment 3)

In embodiment 2, when the connection with the destination AP is disconnected manually (manual disconnection), that is, when the connection with the destination AP is disconnected by user's input operation, the radio communication apparatus is not likely to immediately re-search for the AP to resume the connection with this destination AP. By contrast with this, when the connection with the destination AP is disconnected automatically (automatic disconnection), for example, when the connection with the destination AP is disconnected due to unstable communication environment, the radio communication apparatus is likely to re-search for the AP to resume the connection with this destination AP soon.

Thus, when the connection with the destination AP is disconnected manually, at the same time on disconnecting manually, the radio communication apparatus according to the present embodiment recovers the priorities of the profiles held in holding section 101 to the profiles before changing. On the other hand, when the connection with the destination AP is disconnected automatically, as embodiment 2, after the predetermined time has been passed from the time on disconnecting automatically, change section 107 recovers the priorities of the profiles held in holding section 101 to the profiles before changing.

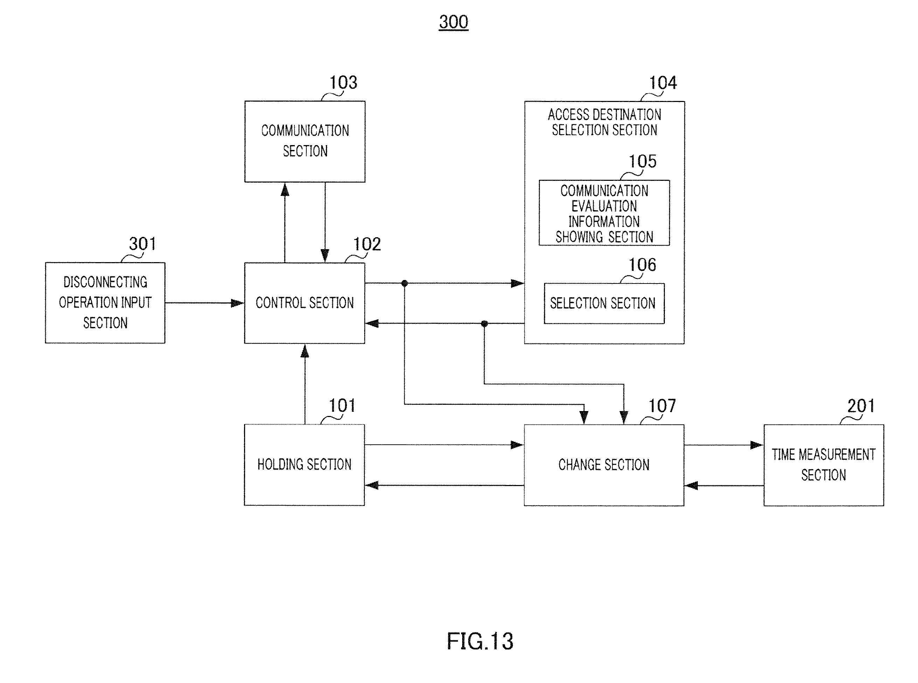

The details will be described below. FIG.13 shows a configuration of radio communication apparatus 300 according to the present embodiment. Configuration sections in FIG.13 that are the same as in FIG.9 will be assigned the same reference numerals as in FIG.9 and overlapping descriptions will be omitted.

Disconnecting operation input section 301 of radio communication apparatus 300 (FIG.13) according to the present embodiment performs input operation to disconnect against the destination AP connecting with the apparatus. When a input operation to disconnect is performed, disconnecting operation input section 301 outputs to control section 102 a command (disconnecting command) to disconnect the connection with the destination AP. The disconnecting command includes information that shows whether the operation input is performed manually (manual disconnection) or automatically (automatic disconnection).

When receiving as input a command to disconnect from disconnecting operation input section 301, control section 102 commands to communication section 103 to disconnect the connection with the destination AP. Control section 102 outputs to change section 107 a connecting state notice including information that shows whether the connection with the destination AP is disconnected manually or automatically.

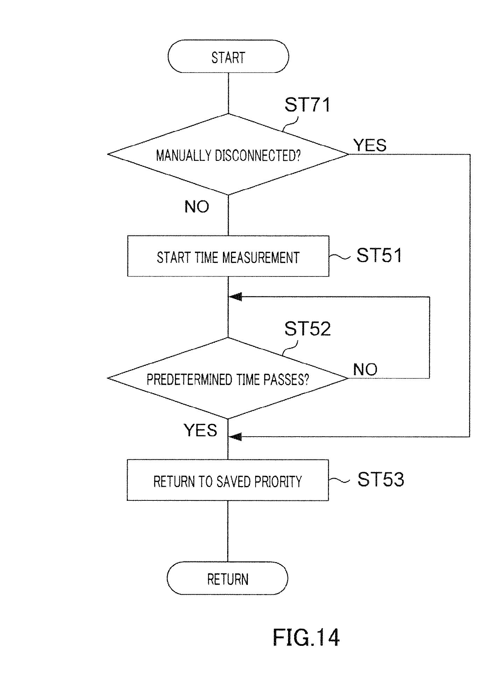

Befo re changing the priority of the profile of the AP (destination AP) selected at selection section 106 as embodiment 1, change section 107 saves the priorities of the current profiles held in holding section 101. After changing the priority of the profile of the destination AP, when a connecting state notice showing that a connecting state is "manual disconnection" is input, change section 107 immediately returns the priority of the profile of the destination AP to the priority before changing (the priority of the saved profile). That is, when the connection with the destination AP is disconnected manually (ST71 shown in FIG.14: YES), at the same time of disconnecting, change section 107 returns the priority of the profile of the destination AP to the priority before changing.

On the other hand, when, after changing the priority of the profile of the destination AP, a connecting state notice showing that a connecting state is "automatic disconnection" is input (ST71 shown in FIG.14: NO), change section 107 outputs this connecting state notice to time measurement section 201, as embodiment 2 (FIG.10). When lapse time information is input from time measurement section 201 (that is, when a predetermined time has been passed from the time when a connecting state notice ("automatic disconnection") is input), change section 107 returns the priority of the profile of the destination AP to the priority before changing.

For example, a case will be explained where radio communication apparatus 300 connects with an AP on a temporary basis, that is, where the priority of the profile of the selected destination AP is temporarily increased. Here, when ending the connection with an AP, radio communication apparatus 300 disconnects (manual disconnection) the connection with the AP by input operation and at the same time returns the priority of the profile to the priority before changing. That is, in the case of manual disconnection, radio communication apparatus 300 determines that it is unlikely to re-search for the disconnected AP and returns the priorities of the profiles to the priorities before changing. By this means, radio communication apparatus 300 can immediately perform an AP search based on the priorities of the profiles before changing (that is, the normal priority).

Therefore, according to the present embodiment, the radio communication apparatus controls the timing to recover the priorities of the profiles held in the apparatus, according to whether the connection with an AP is disconnected manually or automatically. By this means, in the case of manual disconnection, that is, when an AP re-search is not likely to be performed soon, it is possible to immediately return the priorities of the profiles to the original priorities, and the radio communication apparatus can search for an AP by using the original priorities (the priorities based on communication evaluation information). In the case of automatic disconnection, that is, when an unexpected disconnection is produced and an AP re-search is likely to be performed soon, the priorities of the profile after changing is maintained during a predetermined time, so that the radio communication apparatus can shorten the time for searching for the destination AP as embodiment 2.

### (Embodiment 4)

With the present embodiment, the radio communication apparatus shows to change the priority of the profile, when the priority of the profile of the selected AP (the destination AP) is changed.

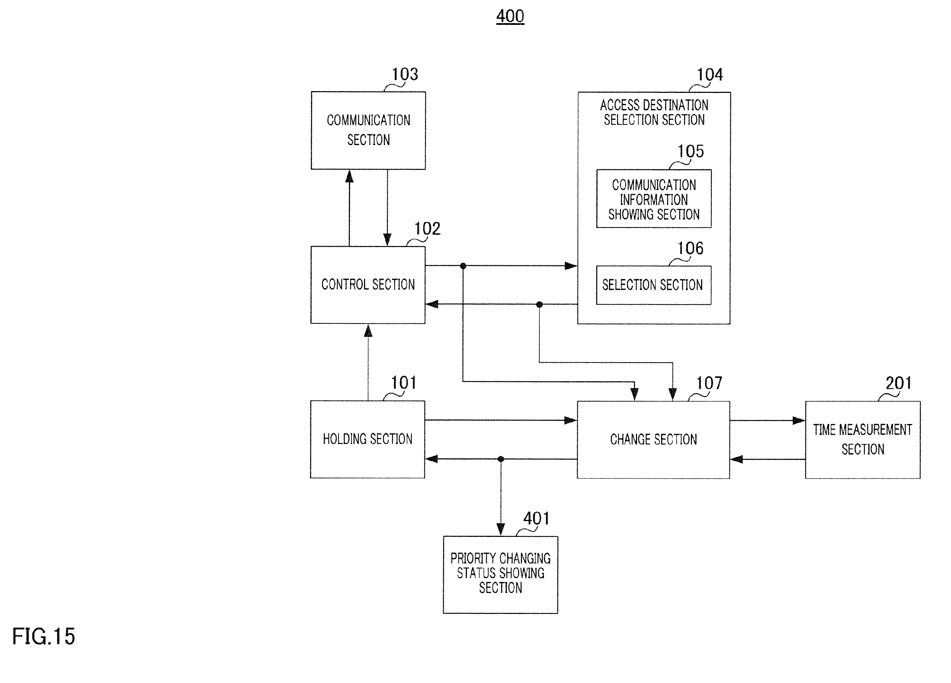

The details will be described below. FIG.15 shows a configuration of radio communication apparatus 400 according to the present embodiment. Configuration sections in FIG.15 that are the same as in FIG.9 will be assigned the same reference numerals as in FIG.9 and overlapping descriptions will be omitted.

Priority changing status showing section 401 of radio communication apparatus 400 (FIG.15) according to the present embodiment shows to change the priority of the profile when a command to change the priority of the profile of the destination AP that is selected at selection section 106 is input from change section 107.

For example, a case will be described where, among AP1 - AP4 shown in FIG.1, the priority of the profile of AP2 ("office 2") is changed.

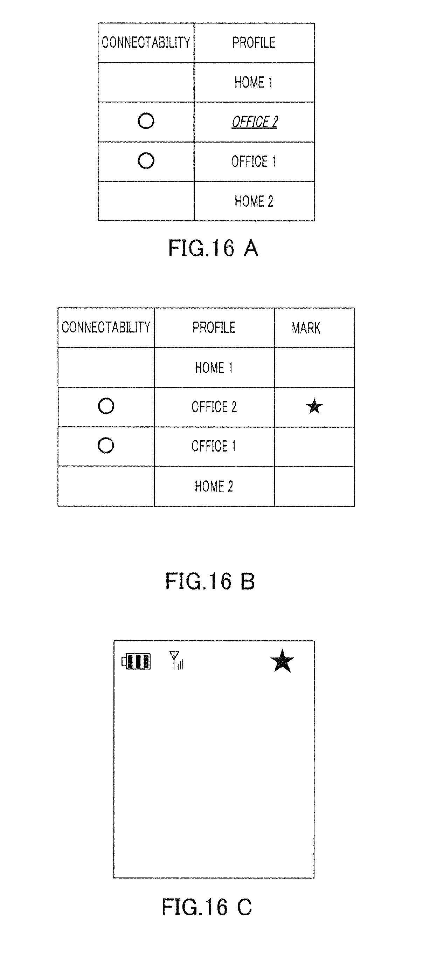

After a command to change the priority of the profile of AP2 ("office 2") is input from change section 107, for example, as shown in FIG.16A, priority changing status showing section 401 may change and show the format (the font or the color) of the AP ("office 2") having a priority subject to change, when showing all the profiles held in holding section 101.

As shown in FIG.16B, when showing all the profiles held in holding section 101, priority changing status showing section 401 may add a mark (a star in FIG.16B) to the profile of the AP ("office 2") having a priority subject to change.

As shown in FIG.16C, when showing all the profiles held in holding section 101, priority changing status showing section 401 may show a mark (a star in FIG.16C) showing that the priority of the profile of any one of APs is changed by using, for example, a pictograms.

Therefore, according to the present embodiment, the radio communication apparatus can show a user a state in which an AP is selected on a temporary basis and temporarily has a higher priority. For example, the radio communication apparatus shows that the priority of the profile is changed, so that the user can easily determines an operation, such as, whether to change the priority of the profile to the one before changing, or to save the priority after changing.

Embodiments of the present invention have been explained above.

The above embodiment describes a case where a WLAN terminal connects with an AP as one example. However, the present invention is by no means limited to a case where a WLAN terminal connects with an AP, and it is equally possible to implement the present invention with the radio communication apparatuses other than WLAN, in a case where, for example, a terminal that is capable of Bluetooth (registered trademark) communication connects with surrounding communication devices.

The above embodiment has described a case where a radio communication apparatus (WLAN terminal) searches for an AP based on the priorities of AP profiles. However, the present invention does not limit to the priorities of AP profiles, but based on, for example, the field intensity of an AP, the speed that an AP communicates, and the encrypted robustness of an AP, a radio communication apparatus may search for an AP.

The disclosure of Japanese Patent Application No.2009-032923, filed on February 16, 2009, including the specification, drawings and abstract, is incorporated herein by reference in its entirety.

### Industrial Applicability

The present invention is applicable to, for example, a mobile communication system.

## Claims

1. A radio communication apparatus comprising:
a holding section that holds profiles including necessary information to establish a connection with a communication device and in which priorities of individual communication devices upon a search are set;
a selecting section that selects a profile of the communication device which establishes a connection with the radio communication apparatus among the profiles held in the holding section; and
a changing section that changes a priority of the selected profile to a highest in profiles of the communication devices which are able to connect with the radio communication apparatus among the profiles held in the holding section.

2. The radio communication apparatus according to claim 1, wherein the changing section maintains relationships of priorities between the selected profile and profiles of communication devices which are unable to connect with the radio communication apparatus.

3. The radio communication apparatus according to claim 1, wherein the changing section makes the priority of the selected profile lower than the priorities of the profiles of the communication devices which are unable to connect with the radio communication apparatus and which is assigned higher priority than the selected profile.

4. The radio communication apparatus according to claim 1, wherein the changing section changes the priority of the selected profile to the highest among all the profiles held in the holding section.

5. The radio communication apparatus according to claim 1, wherein the changing section changes the priority of the selected profile higher than the priorities of the profiles of the communication devices which are unable to connect with the radio communication apparatus and which are assigned lower priorities than the profiles of the communication devices which are able to connect with the radio communication apparatus.

6. The radio communication apparatus according to claim 1, wherein the changing section maintains relationships of priorities between profiles other than the selected profile among the profiles of the communication devices which are able to connect with the radio communication apparatus, and the profiles of the communication devices which are unable to connect with the radio communication apparatus.

7. The radio communication apparatus according to claim 1, wherein, when the priority of the selected profile is changed and afterwards a connection with the communication device corresponding to the selected profile is disconnected, the changing section further returns the priority of the selected profile to a priority before changing.

8. The radio communication apparatus according to claim 7, wherein, when the disconnection is carried out manually, the changing section returns the priority of the selected profile to the priority before changing at the same time as the disconnection.

9. The radio communication apparatus according to claim 7, wherein, when the disconnection is carried out automatically, after a predetermined time has been passed from a time to disconnect, the changing section returns the priority of the selected profile to the priority before changing.

10. The radio communication apparatus according to claim 1, further comprising a showing section that shows a change of the priority when the priority of the selected profile is changed by the changing section.

11. A priority change method comprising:
holding profiles which include information required to establish a connection with a communication device and in which priorities of individual communication devices are set;
selecting a profile of the communication device which establishes a connection with a radio communication apparatus among the profiles held in a holding section; and
changing a priority of a selected profile to a highest in the profiles of the communication devices which are able to connect with the radio communication apparatus among the profiles held in the holding section.
